# EUROPEAN PATENT APPLICATION

(11) **EP 1 289 249 A1**
(43) Date of publication of application: **05.03.2003**
(21) Application number: 01120590.3
(22) Date of filing: 29.08.2001
(51) Int. Cl.: H04M 11/10, G06F 3/16

(54) **A method, device and system for compact transfer of digitized audio signals by command**

(71) Applicant: SIEMENS AKTIENGESELLSCHAFT, 80333 München (DE)
(72) Inventor: Winterkorn, Horst, 35435 Wettenberg-Wissmar (DE)

(57) **Abstract**

A method for transferring (86, 88) audio information after converting the audio information into a digital signal stream. The stream is transferred (86, 88) according to a standardized transfer protocol, thereby realizing a source-destination communication pattern. In particular, in the communication pattern a specific hardware facility is interposed that effects the transferring (86, 88) as a unified and compact operation upon reception of a pertinent transfer command signal (85) or key (54) actuation (85).

## Description

The invention relates to a method, device and system for transferring audio information ― and in particular speech information - after converting said audio information into a digital signal stream, according to a standardized transfer protocol, thereby realizing a source-destination communication pattern. Prior art German Patent DE 195 17 391 C2 to Siemens AG of Munich, DE describes a method and apparatus for transferring audio signals between terminal communication devices. In particular, the prior art technology employs the converting of audio speech into a digital sample stream and the compressing of said digital sample stream whilst possibly using an optional digital error correction mode, the characterizing of each respective data block in question as audio, and the transferring proper of the audio information blocks according to a facsimile transmission protocol.

The prior art procedure requires a huge bandwidth that should be appropriate to transferring facsimile signals. The present inventor has well recognized the state of the art conversion technology from speech to text. Furthermore, the present inventor has recognized the widespread and immediate acceptance of the SMS facilities, in which system messages of limited length can be composed to contain an optimum information density, which may even surpass that of conventional written or printed text. However, the actual composing of such messages often takes an inappropriately long time. Therefore, the inventor has envisioned an easy-to-use organization that may be used in a similar manner as various communication devices that have come into widespread use.

In consequence, amongst other things, it is an object of the present invention to provide a method for transmitting speech information as recited, which method allows easy message composing, a compact message format and message transfer procedure, and a straightforward decodability, and which method under various circumstances will offer a near unsurpassed information density.

Now therefore, according to one of its aspects the invention is characterized by the following steps:
in said communication pattern interposing a specific hardware facility that effects said transferring as a unified and compact operation upon reception of a pertinent transfer command signal or key actuation.

The invention also relates to an apparatus being arranged for implementing the method of the present invention, and being constituted by means of user features that are attractive, easy to understand, and straightforward to use. The invention also relates to a transmitter/receiver system being arranged for implementing the method according to the invention. Further advantageous aspects of the invention are recited in dependent Claims.

These and further aspects and advantages of the invention will be discussed more in detail hereinafter with reference to the disclosure of preferred embodiments, and in particular with reference to the appended Figures that show:
Figure 1, a first apparatus configuration according to the present invention;
Figure 2, a second apparatus configuration according to the present invention;
Figure 3, a third apparatus configuration according to the present invention;
Figure 4, an operational flow chart for use with the present invention.

Broadly, the present invention contemplates the use of various objects and the implementation in various areas. A first one is to use a telephone device for mobile use (for example, a so-called "Handy") or for fixed application, which device will convert the speech input into digital signals and will reduce and compress the amount of data such as in similar manner as according to the well-known state of the art MP3 protocol and will then function in a similar manner as a dictation device. The managing of the voice messages can be effected with respect to the speech inputting in the background in an automatic manner, thereby then causing the effective transfer to the addressee(s) to be done at a preselectable instant in time. The interconnection information, such as "successful", "failed", and the like may be given to the user person either before or after inputting of the speech. In fact, the device may even before the transmission to the receiver detect that all necessary information has been effectively joined. The recording device at the input can comprise an actuatable control key for signaling completion of the message, a recognition mechanism for recognizing a control command by speech recognition, such as "stop", or another means for signaling that all information that were necessary for the message has indeed been received, so that thereupon the message in question may be effectively sent to an intended receiver station in a unified and compact manner. This will save both message composing and message transmission costs.

In parallel or alternative thereto, the recording of the converted speech or audio may be transiently buffered, so that the completion information, be it speech, transmission point or interval, or receiver data, may be added later. Thereto, the input device may have a memory stick, a storage chip, or another storage module for the data. The spoken message or information will be converted and compressed by an internal program, therewith allowing the fast and reliable transfer even of very specific or compact information. The control field for controlling the operation may be represented by a keyboard or by touch screen. Data storage and preparation can be effected in a program interval, and the necessary program therefor can be entered even into a portable telephone device through upgrading thereof. The upgrading proper may be effected through the usual interfaces such as infra-red, Bluetooth, or even through a berthing station that downloads the necessary program. Implementation of the present invention should go in concert with the applicable manufacturer of the device. Another possibility is to provide earlier portable or fixed telephone sets with new software. For manufacturer-specific adapters in this respect an "upgrade kit" would be appropriate to provide.

In parallel or alternative thereto, a kind of mini-dictation apparatus is proposed, that may readily be pre-installed or integrated into a portable or fixed telephone, or temporarily fixed thereto as an add-on module, such as by means of a clasp of appropriate size or format. This module can also be provided with an Infra-Red, Bluetooth or normal interface, so that the mechanical coupling is only optional. The important aspect in this circumstance is matchability or compatibility. The dictation feature must be able to access the telephone through an immediate impulse, command, or entry code. In particular, no imposter should be able to use a non-matching telephone apparatus. A prerequisite should be a registration procedure to allow the combination of dictation device and telephone to package, to transmit, and to receive information. This miniature device should be kept quite small, so as to fit in a jacket or trouser's pocket, whereas Lithium-ion accumulators should provide for conventional current power. Of course, such a powering feature could advantageously be replaced by a solar cell facility. The choice among the various possibilities should generally be only an aspect of costs.

The functional integration of a device according to the present invention into a motor vehicle navigation system is an advantageous extension that may be realized along various different routes. A first one is to couple the navigation system with a telephone, thereby allowing to handle the voice message alternatively in the telephone medium or immediate mode, or alternatively in the vehicle navigation mode that is associated with the navigation messaging system proper. Still another extension is to associate the navigation system with an E-mail address or another identifier code, that allows verification and/or authentification of receiver entities, etcetera.

Still further features would be made possible by attaching the device according to the present invention with a personal computer, inasmuch as the data packets could then be distributed through Internet or applicable Mail facilities. A nice feature would be a combined docking or berthing station for portable telephone and mini-dictation device. Here, the various service providers could offer distinctive server facilities and services. In this context, also a Voice-book could be feasible which would allow a user to store incoming and/or outgoing messages in a manner that would allow easy recall or replay when necessary. This approach would render the expensive Mailboxes that are presently in use, virtually superfluous. Of course, the integration of the PC would cure various defects, such as now allowing that both telephone extension numbers and E-mail addresses may be specified as an intended receiver. In short, a whole spectrum of new applications and features would emerge.

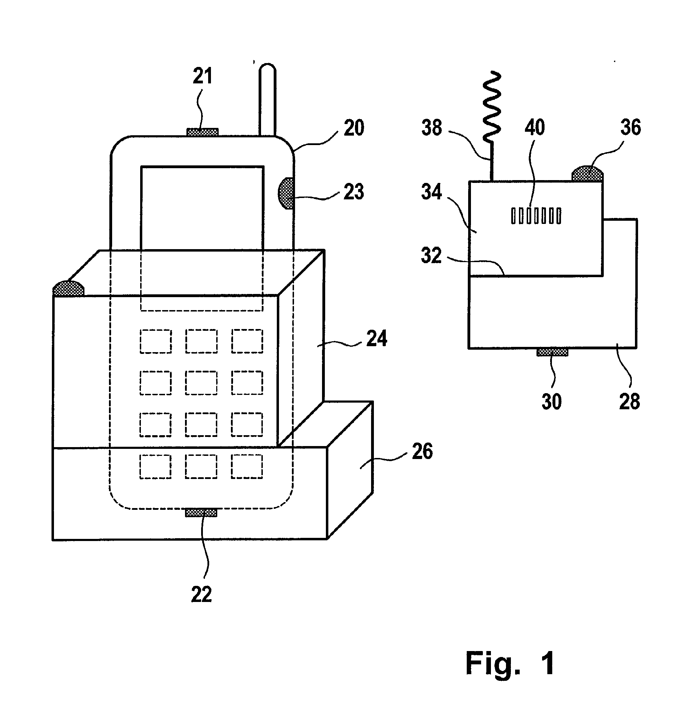

Figure 1 illustrates a first apparatus configuration according to the present invention. Element 20 represents a portable telephone device with antenna, display field, and twelve keys. Further features such as extra keys, indicators, and others have not been specifically indicated as not being limiting to the present invention, apart from an infra-red interface 22 at the lower edge, microphone 21 at the upper edge, and a Bluetooth transmitter/receiver facility 23 at the right hand side. By itself, the infra-red interface 22 has become a conventional feature for various remote control and other transmission environments, so that the element 22 itself would not need further disclosure. Also Bluetooth has become a household word in various environments. The portable telephone 20 has been partly drawn in interrupted lines, inasmuch as viewing thereof has been partly obscured by devices 24 and 26. These latter devices associate to the portable telephone, and in particular, may constitute a small dictation device 24 and a power supply 26. This feature allows to have multimode telephone transmissions, to wit in the normal manner through unprocessed speech, which is easy to compose, immediate in conversation, but expensive as to its use of transmission time. The dictation mode is supported by the dictation apparatus, and allows for encoding, prerecording, compression, thereby possibly surrendering the immediate character of telephone conversation, whilst attaining a much lower cost for transferring compressed speech, and possibly music or other audio. Of course, real-time switching between the two modes of telephone versus compact message transfer is an effective possibility. The connection between the mini-dictation device and the portable telephone may be a mere juxtaposing such as through the providing of a fixating mechanical clasp or the like, which is inexpensive, but alternatively also a docking or berthing facility which requires extra measures and which would possibly require additional space, but which would keep the communicating devices in fixed and optimum spatial relation to each other, thereby ensuring optimum transfer quality. The conversion between speech and data can be effected either in the dictation device or in the portable telephone itself. The integration between devices 24 and 26 may be temporary or permanent, dependent on requirements for low volume/weight, high-intensity usage, and other parameters.

At the right hand side of Figure 1, a slightly different configuration of the above has been shown, wherein the lower part device 28 represents a base station, again with infra-red interface 30. Moreover, there are provided plugging space 32 for standard pins on a dictation device in order to operate both as data connection and also as power supply. The dictation device furthermore has a PC connection cable 38 (PC itself not being shown), Bluetooth interface 36, and communication pins 40 to a portable telephone device like device 20. Apart from being operated as a transmitter device, the combination 28/34 may alternatively be operated as a receiver device, so that effectively the combination of Figure 1 would then illustrate a complete transmitter/receiver system.

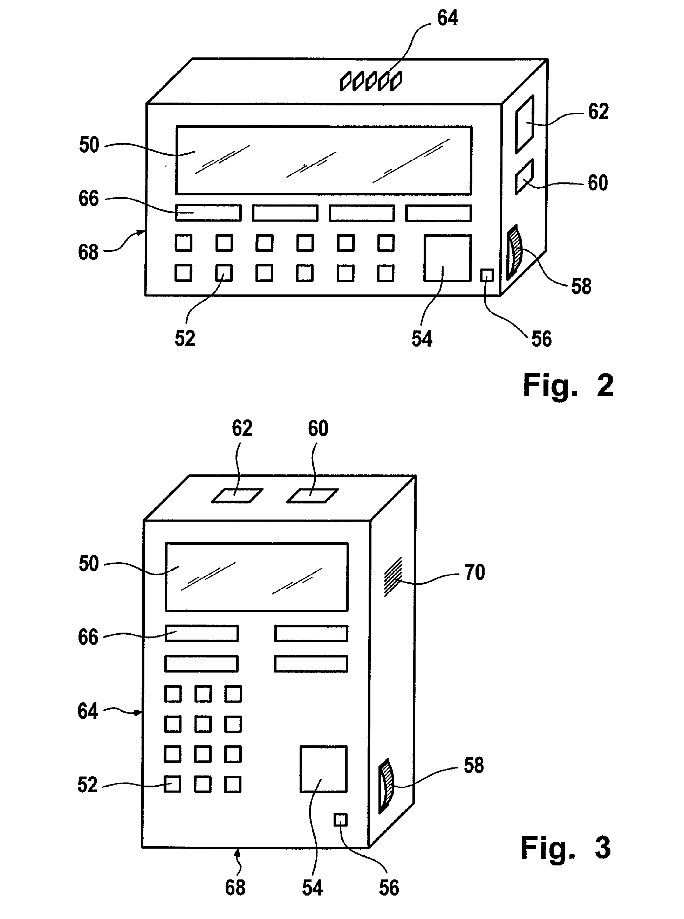

Figure 2 illustrates a second apparatus embodiment configuration according to the present invention, and in particular, a mini dictation device with dimensions 6 x 4 x 1 centimeters as an example. The following facilities have been provided: display field 50, numeral keys 52, a transmit button 54, on/off button 56, rotary switch 58 for activating various functions, send/receive Bluetooth interface facility 58, IR interface 62, standard interface 64, special function keys 66, berth facility 68 for a memory stick or another storage medium, and in particular, a memory chip. The apparatus may be combined in the configuration of Figure 1, with a telephone device. The memory facility may be used for storing data, converted speech signals, or an upgrading program. Similarly, the telephone device 20 of Figure 1 might allow presentation of such memory facility.

Figure 3 illustrates a third apparatus configuration according to the present invention. Generally, the main part of the facilities of Figure 2 has been shown again, but however keeping the dictation device in a generally vertical shape. Such could provide an improved ergonomy. In consequence, the reference numerals of Figure 2 have been re-used as far as possible, and a repeated discussion thereof has been omitted here. Item 70 is a microphone or bi-directional audio facility.

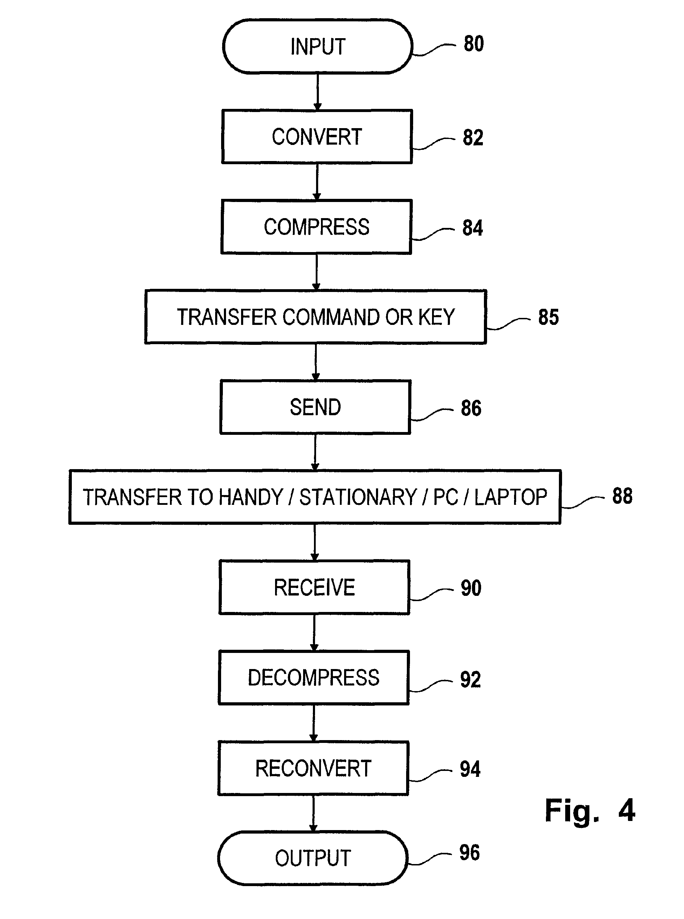

Figure 4 illustrates an operational flow chart for use with the present invention. In particular, block 80 represents the inputting of speech or music. Block 82 represents the converting thereof to digital. Block 84 represents the compressing of the data signals to a space-saving format, whilst possibly including an error protection procedure. Block 85 represents the detecting of a transfer command, immediate impulse, entry code, or specific key actuation. Block 86 represents the actual transmission. Block 88 represents the transfer to stationary or mobile telephone device, or to a PC or Laptop, block 90 represents the receiving, block 92 the decompression, block 94 the re-conversion to analog, and block 96 the outputting of the end result that may be audio or music.

While the above described embodiments of the invention are the preferred ones, it is apparent to those skilled in the art that many other changes and modifications may be made, without departing from the invention in its broader aspects. Therefore the intentions of the claims is to cover such changes and modifications, falling within the true spirit and scope of the invention.

## Claims

1. A method for transferring audio information after converting (82) said audio information into a digital signal stream and transferring (86, 88) said stream according to a standardized transfer protocol, thereby realizing a source-destination communication pattern (20/24, 28/34), said method being **characterized by** the following steps:
in said communication pattern interposing a specific hardware facility (20) that effects said transferring (86, 88) as a unified and compact operation upon reception of a pertinent transfer command signal (85) or key (54) actuation (85).

2. A method as claimed in Claim 1, **characterized by** said digital stream being transiently stored for subsequent automatic execution of said transferring (86, 88) to said destination (28/34).

3. A method as claimed in Claim 1, **characterized by** the use thereof in a portable telephone device (20) being arranged as a transferring station.

4. A method as claimed in Claim 1, **characterized by** the use thereof in a miniature dictation apparatus (24) that has a coupling interface to a portable or stationary telephone apparatus (20) that is arranged for effecting the transferring (86, 88) through an immediate impulse (85), command, or entry code.

5. A method as claimed in Claim 1, **characterized by** the use thereof in an in-vehicle system that is arranged for assisting in navigating a motor vehicle and which comprises a navigational messaging system.

6. A method as claimed in Claim 5, **characterized by** allowing said transfer either in an immediate mode or through a vehicle navigation mode.

7. A method as claimed in Claim 6, **characterized in that** said allowing includes a real-time mode switch-over facility.

8. A method as claimed in Claim 1, **characterized by** the use thereof in a personal computer or laptop device, to allow Internet or Mailing facilities for said transferring.

9. A method as claimed in Claim 1, **characterized by** allowing a registration procedure between an input facility and a transferral facility.

10. A method as claimed in Claim 1, **characterized by** providing a facility for real-time switching between an immediate telephone mode and a compressed speech transferral mode.

11. A device being arranged for implementing a transmitter station for use with a method as claimed in Claim 1 for transferring (86, 88) audio information and having converting means for converting (82, 84) said audio information into a digital signal stream and transferring means for transferring (86, 88) said stream according to a standardized transfer protocol, thereby realizing a source-destination communication pattern (20/24, 28/34), said device being **characterized in that** it comprises
in said communication pattern interposing a specific hardware facility (20) being arranged for effecting said transferring (86, 88) as a unified and compact operation as being triggered (85) by a pertinent transfer command signal receiving means or a control key (54) actuation.

12. A device as claimed in Claim 11, **characterized by** docking or berthing means for a portable telephone device (20) and/or a mini dictation device (24).

13. A device as claimed in Claim 11, **characterized by** Voicebook means for temporarily storing incoming and outgoing messages.

14. A device as claimed in Claim 11, **characterized by** a personal computer or laptop device, and being provided with Internet or Mailing facilities for said transferring (86, 88), and/or being provided with a telephone extension number as well as with an E-mail address or other selection mechanism.

15. A device as claimed in Claim 11, **characterized by** positioning means (68) for positioning a memory stick, a storage chip, or another storage module for therewith presenting an upgrade facility for said device or a data storage facility for storing data as anticipation of said transferring.

16. A transmitter-receiver system being arranged for implementing a method as claimed in Claim 1 and comprising a device being arranged for implementing a transmitter station (20) for transferring (86, 88) audio information and having converting means for converting (82, 84) said audio information into a digital signal stream and transferring means for transferring (86, 88) said stream according to a standardized transfer protocol, thereby realizing a source-destination communication pattern (20/24, 28/34), being **characterized in that**
said system comprises interposed in said communication pattern a specific hardware facility (20) and that is arranged for effecting said transferring-(86, 88) as a unified and compact operation as being triggered (85) by a pertinent transfer command signal receiving means or a control key (54) actuation, said system furthermore comprising a receiver device (28/34) for receiving (90) and decoding (92, 94) said unified and compact stream.
